# EUROPEAN PATENT SPECIFICATION

(11) **EP 1 395 529 B1**
(45) Date of publication and mention of the grant of the patent: **08.12.2004**
(21) Application number: 02733060.4
(22) Date of filing: 28.05.2002
(51) Int. Cl.: C04B 41/89, C25C 3/08, C25C 3/12

(54) **CARBON TILES WITH REFRACTORY COATING FOR USE AT ELEVATED TEMPERATURE**
KOHLENSTOFFKACHELN MIT FEUERFESTER BESCHICHTUNG FÜR HOCHTEMPERATURANWENDUNGEN
TUILES DE CARBONE AVEC REVETEMENT REFRACTAIRE POUR UTILISATION A TEMPERATURE ELEVEE

(30) Priority: 30.05.2001 WO PCT/IB01/00949; 15.03.2002 WO PCT/IB02/00821
(43) Date of publication of application: 10.03.2004
(73) Proprietor: MOLTECH Invent S.A., 1520 Luxembourg (LU)
(72) Inventor: DURUZ, Jean-Jacques, CH-1204 Geneva (CH); NGUYEN, Thinh, T., CH-1213 Onex (CH); DE NORA, Vittorio, Nassau (BS)
(74) Representative: Cronin, Brian
(86) International application number: PCT/IB2002/001908
(87) International publication number: WO 2002/096830

(56) References cited:
- WO-A-98/17842
- DATABASE CA [Online] CHEMICAL ABSTRACTS SERVICE, COLUMBUS, OHIO, US; HAKUTO KAGAKU K. K., JAPAN ET AL: "Coating carbon electrodes" retrieved from STN Database accession no. 102:118464 CA XP002213169 & JP 59 184781 A (HAKUTO KAGAKU K. K., JAPAN;NISSHIN STEEL CO., LTD.) 20 October 1984 (1984-10-20)

## Description

### Field of the Invention

The invention relates to the protection with a refractory coating of carbon tiles, in particular for use in oxidising and/or corrosive environments.

### Background of the Invention

The production, purification or recycling of metals, such as aluminium or steel, is usually carried out at high temperature in very aggressive environments, in particular in molten metal, molten electrolyte and/or corrosive gas. Therefore, the materials used for the manufacture of components exposed to such environments must be thermally and chemically stable.

Graphite and other carbonaceous materials are commonly used for components, especially conductive components. Unfortunately, carbon components do not resist oxidation and/or corrosion and must be periodically replaced.

Several proposals have been made to reduce wear of carbon components in such technologies to achieve a higher operation efficiency, reduce pollution and the costs of operation.

For the purification of molten metals, in particular molten aluminium, by the injection of a flux removing impurities towards the surface of the molten metal, it has been proposed to coat carbon components which are exposed to the molten metal with a coating of refractory material as disclosed in WO00/63630 (Holz/Duruz).

During the electrowinning of metals, such as aluminium, some components are exposed to molten electrolyte, molten metal and corrosive gases. In conventional aluminium production cells these components are still made of consumable carbonaceous materials.

Aluminium is produced conventionally by the Hall-Héroult process, by the electrolysis of alumina dissolved in cryolite-based molten electrolytes at temperatures up to around 950°C. A Hall-Héroult reduction cell typically has a steel shell provided with an insulating lining of refractory material, which in turn has a lining of carbon which contacts the molten constituents and corrosive gases. Conductor bars connected to the negative pole of a direct current source are embedded in the carbon cathode forming the cell bottom floor. The cathode is usually an anthracite based carbon lining made of prebaked cathode blocks, joined with a ramming mixture of anthracite, coke and coal tar, or with glue.

The use of titanium diboride and other RHM current-conducting elements in electrolytic aluminium production cells has been contemplated for long time and is described in US Patents Nos 2,915,442, 3,028,324, 3,215,615, 3,314,876, 3,330,756, 3,156,639, 3,274,093 and 3,400,061. Despite extensive efforts and the potential advantages of having surfaces of titanium diboride at the cell cathode bottom, such propositions have not been commercially adopted by the aluminium industry.

It has long been recognised that it would be desirable to make (or coat or cover) the cathode of an aluminium electrowinning cell with a refractory boride such as titanium diboride that would render the cathode surface wettable to molten aluminium which in turn would lead to a series of advantages. Many difficulties were encountered in producing refractory boride coatings which meet up to the rigorous conditions in an aluminium electrowinning cell. Nevertheless, as described in the following patents, such coatings on carbon bodies have recently been introduced.

WO01/42168 (de Nora/Duruz) and WO01/42531 (Nguyen/Duruz/de Nora) disclose applying a protective coating of a refractory boride such as titanium diboride to a carbon component of an aluminium electrowinning cell, by applying thereto a slurry of particulate boride in a colloid in several layers.

US Patents 4,333,813 and 4,341,611 (both in the name of Kaplan) disclose an aluminium electrowinning cell with a carbon cathode bottom covered with tiles having a refractory hard metal surface, e.g. made of TiB₂.

WO 98/17842 (Sekhar/Duruz/Liu) discloses inter-alia tiles that can be fitted together to form an aluminium production cell. The tiles can be made of a carbon substrate covered with a refractory boride coating applied from a colloidal slurry containing a particulate of the refractory boride. To obtain improved coatings without mud-cracks certain organic additives can be added to the colloidal slurry such as polyvinyl alcohol, polyacrylic acid, hydroxy propyl methyl cellulose, polyethylene glycol, ethylene glycol, butyl benzyl phthalate and ammonium polymethacrylate.

### Summary of the Invention

The invention relates to a method of bonding a protective coating on a wear-exposed surface of a carbon tile comprising applying onto the wear-exposed surface of the carbon tile at least one layer of a slurry of particulate refractory material and/or a heat convertible precursor thereof suspended in a colloidal and/or inorganic polymeric carrier comprising a dispersion of colloidal particles and/or a solution of inorganic polymeric particles of binding metal oxide and/or a heat convertible precursor of the binding oxide; and heat treating the slurry-applied layer(s) to consolidate the particulate refractory material in the binding metal oxide to form said protective coating.

According to the invention a hydrophobic (organic) carbon compound, usually a carbon monomer or polymer, having a hydrophilic substituent is used in the slurry as a bonding agent that bonds the binding metal oxide to the carbon tile by being bonded to the wear-exposed surface of the carbon tile and by having its hydrophilic substituent bonded to the binding metal oxide.

The bonding between the hydrophilic substituent and the (hydrophilic) colloidal and/or inorganic polymeric particles is of electrostatic nature. In the case of a slurry of TiB₂ particles suspended but not dispersed in a colloidal alumina carrier containing polyvinyl alcohol as a (hydrophobic) carbon compound with hydrophilic substituents, the bonding of the constituents is as follows:

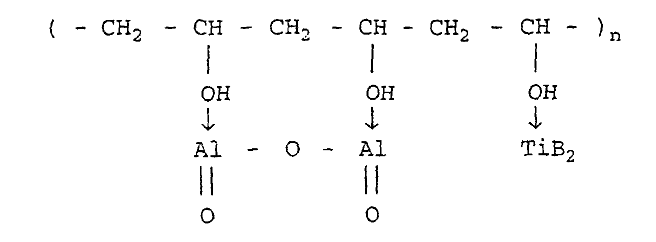

The alcohol groups (-OH) of the polyvinyl alcohol chain interact with the hydrophilic constituents, i.e. alumina and titanium diboride, whereas the hydrophobic hydrocarbon sites (-CH- and -CH₂-) of the polyvinyl alcohol chain are absorbed by the surface of the (hydrophobic) carbon tile and secure the layer thereon.

During heat treatment the carbon compound(s) usually decomposes and the hydrophilic substituents may evaporate leaving the colloidal and/or inorganic polymeric particles in intimate contact with the carbon remaining from the carbon compound.

Suitable hydrophilic substituents of carbon compound(s) may be selected from -OH, -SO₃Na and -COOH, and combinations thereof. The carbon compound(s) can have a carbon/hydrophilic substituent ratio in the range of 2 to 4. For example, the carbon compound(s) is/are selected from ethylene glycol, hexanol, polyvinyl alcohol, polyvinyl acetate, polyacrylic acid, hydroxy propyl methyl cellulose and ammonium polymethacrylate and mixtures thereof.

Usually, the tiles are from 10 to 120 cm long, in particular from 10 to 50 cm long, from 10 to 50 cm wide and from 0.5 to 5 cm thick.

In a preferred embodiment the protective coating comprises on the layer(s) containing the hydrophobic carbon compound (hereinafter called the "bonding layer") one or more hydrophilic layer(s) of refractory material which are substantially free of any elemental carbon or organic carbon compound.

The attachment between the bonding layer(s) and the hydrophilic layer(s) is ensured by the affinity between hydrophilic constituents, e.g. ceramics, present in the layers.

It follows that the or each hydrophilic layer on the bonding layer(s) is well bonded to the carbon tile without containing at its surface organic carbon material that could react during use to form carbides or other compounds, in particular aluminium carbide when exposed to aluminium, thereby damaging the protective coating and impairing its electrical conductivity.

Conveniently, the or each hydrophilic layer is also applied from a slurry of particulate refractory material and/or a heat convertible precursor thereof suspended in a colloidal and/or inorgan polymeric carrier comprising a dispersion of particles of a binding metal oxide and/or a heat convertible precursor thereof.

The protective coating, in particular the bonding and/or the hydrophilic layer(s), may comprise a binding metal oxide selected from lithia, beryllium oxide, magnesia, alumina, silica, titania, vanadium oxide, chromium oxide, iron oxide, nickel oxide, gallium oxide, yttria, zirconia, niobium oxide, molybdenum oxide, ruthenia, indium oxide, tin oxide, tantalum oxide, tungsten oxide, thallium oxide, ceria, hafnia and thoria and precursors thereof. In particular, the slurry can contain colloidal particles selected from lithia, beryllium oxide, magnesia, alumina, silica, titania, vanadium oxide, chromium oxide, manganese oxide, iron oxide, gallium oxide, yttria, zirconia, niobium oxide, molybdenum oxide, ruthenia, indium oxide, tin oxide, tantalum oxide, tungsten oxide, thallium oxide, ceria, hafnia and thoria, and precursors thereof, all in the form of colloids; and/or hydrophilic inorganic polymeric particles selected from lithia, beryllium oxide, alumina, silica, titania, chromium oxide, iron oxide, nickel oxide, gallium oxide, zirconia, niobium oxide, ruthenia, indium oxide, tin oxide, hafnia, tantalum oxide, ceria and thoria, and precursors thereof, all in the form of inorganic polymers.

Usually, the hydrophilic colloidal particles are made of a heat stable ceramic, e.g. oxide, or a precursor thereof in the form of a metal salt (e.g. hydroxide) and have a generally spherical or polyhedral shape of submicronic dimensions, typically having a diameter between 10 and 100 nanometer, and are dispersed in an aqueous dispersion liquid. The hydrophilic inorganic polymeric particles are also made of precursors of heat stable ceramic such as oxides (e.g. in the form of hydrolysed metal salts), and are in the form of molecular chains of submicronic length, typically form 1 to 100 nm long, dissolved in a solution. The magnitude of these dimensions distinguishes colloids/inorganic polymers from bulk systems in the following way: (a) an extremely large surface area and (b) a significant percentage of molecules reside in the surface of colloidal/polymeric systems. Up to 40% of the molecules may reside at the surface of the colloidal particles and up to 100% of the molecules may reside at the surface of the polymeric particle.

The protective coating, in particular the bonding and/or the hydrophilic layer(s), usually comprises a refractory material selected from borides, silicides, nitrides, oxynitrides, carbides, oxycarbides, phosphides, oxides, aluminides, of titanium, zirconium, hafnium, vanadium, silicon, niobium, tantalum, nickel, molybdenum and iron.

It is preferable to choose particle size below 100 microns for the non-dispersed refractory particles and, when employing combinations of non-dispersed refractory particles, to choose particle sizes which are varied such that the packing of particles is optimised. For example when choosing a composition containing mostly SiC and some MoSi₂ as non-dispersed particles it is preferable to choose the particle size of the MoSi₂ much smaller (at least three times smaller) than the SiC. Generally, the ratio of the particle sizes will be in the range from 2:1 to 5:1, preferably about 3:1, for instance with large particles in the range 15 to 30 micrometers and small particles in the range 5 to 10 micrometers.

Advantageously, the slurry (-ies) producing the protective coating, in particular the bonding and/or the hydrophilic layer(s), comprise(s) a reinforcing metal oxide which reacts with the bonding metal oxide and an integral oxide film on the particles of refractory metal compound to form a mixed oxide matrix embedding the refractory metal compound particles. Suitable combinations of refractory metal compounds, bonding metal oxides and reinforcing metal oxides are disclosed in WO01/42531 (Nguyen/Duruz/de Nora).

The protective coating, in particular the bonding and/or the hydrophilic layer(s), can comprise an aluminium-wetting metal oxide, such as oxides of iron, copper, cobalt, nickel, zinc or manganese, which when exposed to molten aluminium reacts therewith to produce aluminium oxide and the metal of the aluminium-wetting metal oxide, as disclosed in WO01/42168 (de Nora/Duruz).

When the protective coating has hydrophilic and bonding layers, the hydrophilic layer(s) preferably comprise(s) the aluminium-wetting oxide, the bonding layer(s) being made of aluminium-repellent material substantially free of any aluminium-wetting metal oxide. In this way, the protective coating can be well wetted by molten aluminium without exposing the carbon tile to aluminium which would react with the carbon tile to form aluminium carbide and impair the adherence of the protective coating.

Preferably the carbon tile is made of graphite or graphitised carbon material.

The carbon tile can comprise a bottom surface which is not covered with the protective coating.

Another aspect of the invention relates to a slurry for forming a protective coating of particulate refractory material consolidated in a binding metal oxide upon application and heat treatment of the slurry on a wear-exposed surface of a carbon tile for use in an aluminium electrowinning cell. The slurry comprises the particulate refractory material and/or a heat convertible precursor thereof suspended in a colloidal and/or inorganic polymeric carrier comprising a dispersion of colloidal particles and/or a solution of inorganic polymeric particles of binding metal oxide and/or a heat convertible precursor of the binding oxide.

More particularly the invention relates to the use in such a slurry of a hydrophobic carbon compound having a hydrophilic substituent as an agent for bonding the binding metal oxide to the carbon tile by bonding the hydrophobic carbon compound to the wear-exposed surface of the carbon tile and by bonding its hydrophilic substituent to the binding metal oxide.

Another aspect of the invention relates to a tile that comprises a carbon substrate having a wear-exposed surface covered with a protective coating that comprises: at least one bonding layer of particulate refractory material consolidated in a binding metal oxide formed on the wear-exposed surface of the carbon substrate from a heat-treated slurry that comprises the particulate refractory material and/or a heat convertible precursor thereof suspended in a colloidal and/or inorganic polymeric carrier comprising a dispersion of colloidal particles and/or a solution of inorganic polymeric particles of binding metal oxide and/or a heat convertible precursor of the binding oxide; and one or more outer layers of refractory ceramic material.

According to the invention, the outer layer(s) is/are hydrophilic and free of any elemental carbon or organic carbon compound, and the bonding layer(s) further comprise(s) dispersed particles of elemental carbon and/or a carbon compound derived from a hydrophobic carbon compound having a hydrophilic substituent that is present is the slurry prior to heat treatment and that bonds the binding metal oxide to the carbon tile by being bonded to the wear-exposed surface of the carbon substrate and by having its hydrophilic substituent bonded to the binding metal oxide.

A further aspect of the invention concerns an apparatus for the production, purification or recycling of a metal in a molten state. The apparatus comprises at least one component which is protected against a high temperature environment that is oxidising and/or corrosive, and gaseous and/or molten, by at least one tile as described above.

The apparatus can be a cell for the electrowinning of a metal from a compound thereof dissolved in a molten electrolyte. In this case, the tile protects a cell component against the electrowon metal, the molten electrolyte and/or cell gases.

In one embodiment, the apparatus is an aluminium electrowinning cell, the tile protecting the cell component against at least one of molten aluminium, molten electrolyte and anodically produced gases. The hydrophilic layer(s) of the tile may form a cathodic surface which can be aluminium-wettable and optionally drained.

In another embodiment, the apparatus is an arc furnace for the recycling of steel, the tile protecting a component against oxidising gas and/or molten steel.

In a further embodiment, the apparatus is a device for the purification of a molten metal, in particular molten aluminium, magnesium, iron or steel, by the injection of a purifying fluid into the molten metal to remove impurities towards the surface thereof, the tile protecting a component of the device against the molten metal to be purified, the purifying fluid and/or impurities of the molten metal.

As opposed to direct application of the slurry of refractory material to a component, e.g. a cathode bottom, of an apparatus followed by in-situ heat-treatment to form the coating, the application of the slurry to a tile permits consolidation by heat-treatment of the slurry in a controlled environment on the tile before use of the coating in the apparatus.

The invention also relates to a method of producing, purifying or recycling a metal in one the above mentioned apparatus. The method comprises using the tile described above to protect a component of the apparatus against a high temperature environment which is oxidising and/or corrosive, and gaseous and/or molten.

For the electrowinning of metal, the method comprises electrolysing a metal compound, in particular alumina, in a molten electrolyte of a metal electrowinning cell to produce the metal, in particular aluminium, of the compound cathodically and gas anodically, and using the tile to protect a cell component against at least one of electrolyte, cathodically produced metal and anodically produced gas.

### Brief Description of the Drawings

Embodiments of the invention will now be described by way of example with reference to the accompanying schematic drawings, wherein:
- Figure 1 shows a schematic cross-sectional view of an aluminium production cell having its cathode bottom and sidewalls lined with aluminium-wettable tiles according to the invention;
- Figure 2 schematically shows an arc electrode furnace having sidewalls and bottom lined with the tiles according to the invention;
- Figure 3 shows an apparatus for the purification of a molten metal having sidewalls and bottom lined with the tiles according to the invention;
- Figure 3a is an enlarged schematic sectional view of part of a stirrer shown in Figure 3; and
- Figure 4 schematically shows a variation of the stirrer shown in Figure 3.

### Detailed Description

### Aluminium Electrowinning Cell:

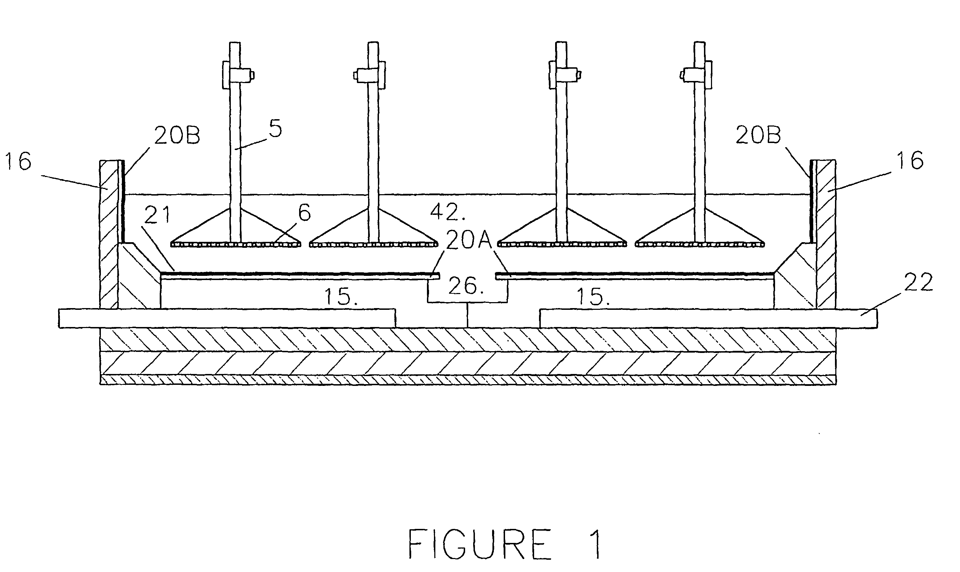

Figure 1 shows an aluminium electrowinning cell comprising a series of metal-based anodes 5 having operative surfaces 6 suspended over drained generally horizontal cathode surface 21 in a fluoride-containing molten electrolyte 42 containing dissolved alumina.

The anodes 5 can be of the type disclosed in WO00/40781 or WO00/40782 (both de Nora) and made of the materials disclosed in any one of the following references: WO99/36591 and WO99/36592 (both in the name of de Nora), WO99/36593 and WO99/36594 (both in the name of de Nora/Duruz), WO00/06800 (Duruz/de Nora), WO00/06801 (de Nora/Duruz), WO00/06802 and WO00/06803 (both in the name of Duruz/de Nora/Crottaz), WO00/06804 (Crottaz/Duruz), WO00/06805, WO00/40783 and WO01/42534 (all in the name of de Nora/Duruz), and WO01/42536 (Duruz/Nguyen/de Nora), and WO01/43208 (Duruz/de Nora).

The anodes may be coated with a protective layer of one or more cerium compounds, in particular cerium oxyfluoride. The protective layers can be maintained by maintaining an amount of cerium species in the electrolyte. Further details of such coatings and cell operation therewith can be found in the US Patents 4,614,569 (Duruz/Derivaz/Debely/Adorian), 4,680,094, 4,683,037 (both in the name of Duruz) and 4,966,674 (Bannochie/Sheriff).

The drained cathode surface 21 is formed according to the invention by tiles 20A which have their upper face coated with a bonding layer and an (outer) hydrophilic aluminium-wettable layer (free of any elemental carbon or organic carbon compound) according to the invention and a temporary start-up layer as taught in Example 4 below.

The tiles 20A are placed side-by-side on a series of carbon cathode blocks 15 extending in pairs arranged end-to-end across the cell. As shown in Figure 1, each cathode block 15 is covered by a tile 20A that extends from the side of the cell to the centre of the cell. Alternatively, a plurality of smaller tiles placed side-by-side across the cell could be used to cover such a cathode block.

The cathode blocks 15 comprise, embedded in recesses located in their bottom surfaces, current supply bars 22 of steel or other conductive material for connection to an external electric current supply.

The drained cathode surface 21 is divided by a central aluminium collection groove 26 located in or between pairs of cathode blocks 15 arranged end-to-end across the cell. The tiles 20A preferably cover a substantial part of the groove 26 to maximise the surface area of the aluminium-wettable cathode surface 21. The tiles 20A leave only a vertical opening, e.g. a gap between two tiles 20A across the cell, above the groove 26 sufficient to let product aluminium drain from the aluminium-wettable cathode surface 21 through the small vertical opening into the aluminium collection groove 26. This vertical opening can also be used to access groove 26 for the tapping of molten aluminium.

The cell comprises carbonaceous sidewalls 16 exposed to molten electrolyte 42 and to the environment above the molten electrolyte 42. These sidewalls 16 are protected against the molten electrolyte 42 and the environment above the molten electrolyte with tiles 20B according to the invention.

In operation of the cell illustrated in Figure 1, alumina dissolved in the molten electrolyte 42 at a temperature of 750° to 960°C is electrolysed between the anodes 5 and the cathode blocks 15 to produce gas on the operative anodes surfaces 6 and molten aluminium on the aluminium-wettable drained cathode tiles 20A.

The cathodically-produced molten aluminium flows on the drained cathode surface 21 into the aluminium collection groove 26 for subsequent tapping.

Figure 1 shows a specific aluminium electrowinning cell by way of example. It is evident that many alternatives, modifications, and variations will be apparent to those skilled in the art.

For instance the cell may have a sloping cathode bottom, as disclosed in WO99/02764 (de Nora/Duruz), and optionally one or more aluminium collection reservoirs across the cell, each intersecting the aluminium collection groove to divide the drained cathode surface into four quadrants as described in WO00/63463 (de Nora).

The cell's cathodic tiles may be covered with a shallow or deep pool of aluminium as disclosed in US Patent 5,651,874 (de Nora/Sekhar).

### Arc Furnace:

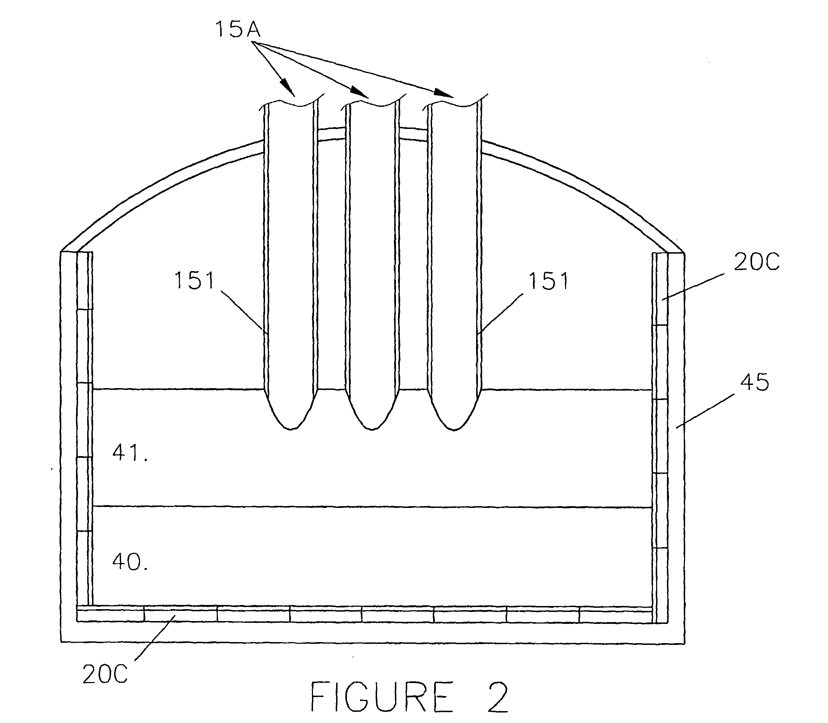

The arc furnace shown in Figure 2 comprises three consumable electrodes 15A arranged in a triangular relationship. For clarity, the distance between the electrodes 15A as shown in Figure 2 has been proportionally increased with respect to the furnace. Typically, the electrodes 15A have a diameter between 200 and 500 mm and can be spaced by a distance corresponding to about their diameter. The bottom and sidewalls 45 of the furnace are protected with coated carbon tiles 20C according to the invention.

The electrodes 15A are connected to an electrical power supply (not shown) and suspended from an electrode positioning system above the cell which is arranged to adjust their height.

The consumable electrodes 15A are made of a carbon substrate laterally coated with a protective layer 20 protecting the carbon substrate from oxidising gas. The bottom of electrodes 15A which is consumed during operation and constitutes the electrodes' operative surface is uncoated. The protective layer 151 protects only the electrodes' lateral faces against premature oxidation. Suitable protective layers are disclosed in WO01/42168 (de Nora/Duruz), WO01/42531 (Nguyen/Duruz/de Nora) and PCT/IB01/00949 (Nguyen/de Nora).

The electrodes 15A dip in an iron source 41, usually containing iron oxide or oxidised iron, such as scrap iron, scrap steel and pig iron. Preferably, the iron source 41 further comprises reductants selected from gaseous hydrogen, gaseous carbon monoxide or solid carbon bearing reductants. The reductants may also comprise non-iron minerals known as gangue which include silica, alumina, magnesia and lime.

The iron source 41 floats on a pool of liquid iron or steel 40 resulting from the recycling of the iron source 41. The iron source 41 and the liquid iron or steel 40 contact the tiles 20C.

During use, a three phase AC current is passed through electrodes 15A, which directly reduces iron from the iron source 41. The reduced iron is then collected in the iron or steel pool 40. The gangue contained in the reduced iron is separated from the iron by melting and flotation forming a slag (not shown) which is removed, for example through one or more apertures (not shown) located on the tiles 20C and sidewalls of the arc furnace at the level of the slag.

The pool of iron or steel 40 is periodically or continuously tapped for instance through an aperture (not shown) located in the bottom of the arc furnace, through the tiles 20C.

### Molten Metal Purification Apparatus:

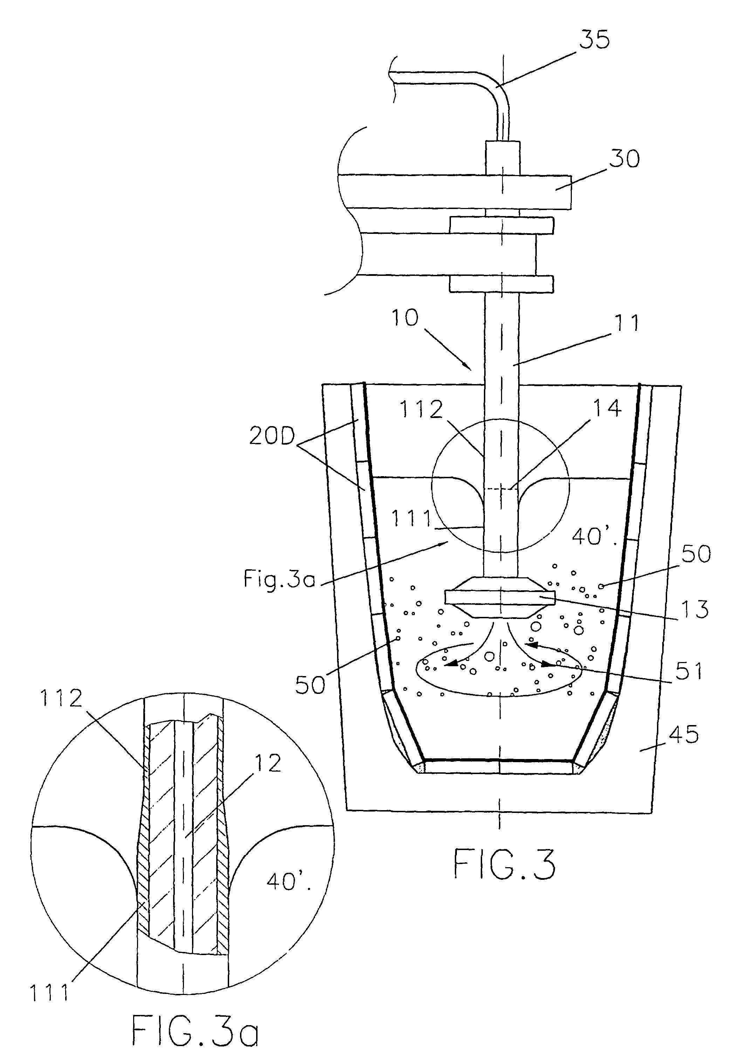

The molten metal purification apparatus partly shown in Figure 3 comprises a vessel 45 containing molten metal 40', such as molten aluminium, to be purified. A rotatable stirrer 10 made of carbon-based material, such as graphite, is partly immersed in the molten metal 40' and is arranged to rotate therein. The sidewalls and bottom of the vessel 45 are protected with coated carbon tiles 20D according to the invention.

The stirrer 10 comprises a shaft 11 whose upper part is engaged with a rotary drive and support structure 30 which holds and rotates the stirrer 10. The lower part of shaft 11 is carbon-based and dips in the molten metal 40' contained in vessel 45. At the lower end of the shaft 11 is a rotor 13 provided with flanges or other protuberances for stirring the molten metal 40'.

Inside the shaft 11, along its length, is an axial duct 12, as shown in Figure 3a, which is connected at the stirrer's upper end through a flexible tube 35 to a gas supply (not shown), for instance a gas reservoir provided with a gas gate leading to the flexible tube 35.

The axial duct 12 is arranged to supply a fluid to the rotor 13. The rotor 13 comprises a plurality of apertures connected to the internal duct 12 for injecting the gas into the molten metal 40', as shown by arrows 51.

The lower part of the shaft 11, i.e. the immersed part and the interface region at or about the meltline 14 of the shaft, as well as the rotor 13 are coated with a protective layer 111 which improves the resistance to erosion, oxidation and/or corrosion of the stirrer during operation.

As shown in Figure 3, the upper part of shaft 11 is protected against oxidation and/or corrosion with a protective layer 112. The upper part of the carbon-based shaft 11 is coated with a thin layer of refractory material 112 protection against oxidation and corrosion, whereas the layer 111 protecting the immersed part of the shaft 11 and the rotor 13 is a thicker layer of refractory material against erosion, oxidation and corrosion.

During operation of the apparatus shown in Figure 3, a reactive or non-reactive fluid, in particular a gas 50 alone or a flux, such as a halide, nitrogen and/or argon, is injected into the molten metal 40' contained in the vessel 45 through the flexible tube 35 and stirrer 10 which dips in the molten metal 40'. The tiles 20C protect the sidewalls and bottom of the vessel 45 against molten metal, the reactive or non-reactive fluid and air.

The stirrer 10 is rotated at a speed of about 100 to 500 RPM so that the injected gas 50 is dispersed throughout the molten metal in finely divided gas bubbles. The dispersed gas bubbles 50, with or without reaction, remove impurities present in the molten metal 40' towards its surface, from where the impurities may be separated thus purifying the molten metal.

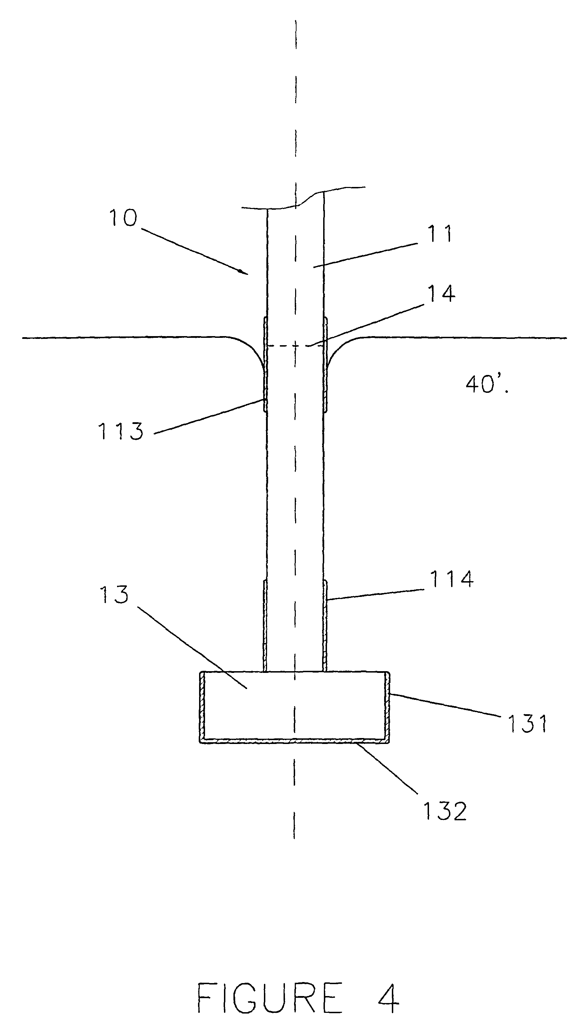

The stirrer 10 schematically shown in Figure 4 dips in a molten metal bath 40' and comprises a shaft 11 and a rotor 13. The stirrer 10 may be of any type, for example similar to the stirrer shown in Figure 3 or of conventional design as known from the prior art. The rotor 13 of stirrer 10 may be a high-shear rotor or a pump action rotor.

In Figure 4, instead of coating the entire shaft 11 and rotor 13, parts of the stirrer 10 liable to erosion are selectively coated with a protective layer.

The interface portion at and about the meltline 14 of the carbon-based lower part of the shaft 11 is coated with a refractory interface layer 113, for instance over a length of up to half that of the shaft 11. Excellent results have been obtained with a layer over a third of shaft 11. However, the length of layer 113 could be a quarter of the length of shaft 11 or even less, depending on the design of stirrer 10 and the operating conditions.

In addition to the interface portion of such stirrers, other areas may be liable to erode, again depending on the design and operating conditions of the stirrers. The schematically shown stirrer 10 in Figure 4 illustrates further coated surfaces which are particularly exposed to erosion. The lower end of the shaft 11 adjacent to the rotor 13 is covered with a protective layer 114. The lateral surface of rotor 13 is covered with a protective layer 131 and the bottom surface of the rotor 13 is coated with a protective layer 132.

For each specific stirrer design, the layer or different protective layers on different parts of the stirrer, such as layers 113, 114, 131 and 132 shown in Figure 4, may be adapted as a function of the expected lifetime of the stirrer. For optimal use, the amount and location of such layers can be so balanced that they each have approximately the same lifetime.

Suitable coatings for protecting the shaft 11 and the rotor 13 are described in WO00/63630 (Holz/Duruz), WO01/42168 (de Nora/Duruz), WO01/42531 (Nguyen/Duruz/de Nora) and PCT/IB01/00949 (Nguyen/de Nora).

In an alternative embodiment (not shown), the layer on such stirrers may be continuous as illustrated in Figure 3 but with a graded thickness or composition so as to adapt the resistance against erosion to the intensity of wear of each part of the stirrer, thereby combining the advantages of the different layers shown in Figure 4.

Various modifications can be made to the apparatus shown in Figures 3, 3a and 4. For instance, the shaft shown in Figure 3 may be modified so as to consist of an assembly whose non-immersed part is made of a material other than carbon-based, such as a metal and/or a ceramic, which is resistant to oxidation and corrosion and which, therefore, does not need any protective layer, whereas the immersed part of the shaft is made of carbon-based material protected with a protective layer. Such a composite shaft would preferably be designed to permit disassembly of the immersed and non-immersed parts so the immersed part can be replaced when worn.

Likewise, a carbon-based non-immersed part of the shaft may be protected from oxidation and corrosion with a layer and/or impregnation of a phosphate of aluminium, in particular applied in the form of a compound selected from monoaluminium phosphate, aluminium phosphate, aluminium polyphosphate, aluminium metaphosphate, and mixtures thereof. It is also possible to protect the non-immersed part of the shaft with a layer and/or impregnation of a boron compound, such as a compound selected from boron oxide, boric acid and tetraboric acid as disclosed in US Patent 5,486,278 (Manganiello/Duruz/Bellò) and in co-pending application WO97/26626 (de Nora/Duruz/Berclaz).

In a modification, a protective layer may simply be applied to any part of the stirrer in contact with the molten metal, to be protected against erosion, oxidation and/or corrosion during operation.

Further details of such a purification or treatment apparatus are disclosed in WO00/63630 (Holz/Duruz).

The invention will be further described in the following examples.

### Example 1

A slurry for use on a carbon tile in accordance with the invention was prepared as follows.

A refractory hard metal boride consisting of 47.5 g surface-oxidised particulate spherical TiB₂ (-325 mesh) having a TiO₂ surface film and a particulate reinforcing metal oxide in the form of 2.5 g TiO₂ (-325 mesh) were stirred and suspended in a colloidal carrier consisting of 20 ml colloidal Al₂O₃ (NYACOL® Al-20, a milky liquid with a colloidal particle size of about 40 to 60 nanometer) to form an colloidal slurry.

After the particulate titanium diboride and oxide had been suspended in the colloidal carrier, an amount of 1 ml of an aqueous solution containing 15 weight% polyvinyl alcohol (PVA), a hydrophobic carbon polymer comprising hydrophilic substituents (-OH), was added to the colloidal slurry.

This slurry produces upon heat treatment an oxide matrix of titanium-aluminium mixed oxide from the reaction of the colloidal oxide Al₂O₃ and TiO₂ present as suspended oxide particles and oxide film covering the suspended TiB₂ particles intimately mixed with carbon from the hydrophobic carbon polymer. The oxide matrix contains and bonds TiB₂ particles.

This slurry is suitable for the manufacture of a composite coating as described in Example 4.

### Example 1a

The constituents of the slurry of Example 1 may be changed as shown in the following Table in which each line represents possible combinations of constituents which are combined with one or more carbon compounds in the form of hydrophobic carbon monomers and/or polymers that comprise hydrophilic substituents, such as ethylene glycol, hexanol, polyvinyl alcohol, polyvinyl acetate, polyacrylic acid, hydroxy propyl methyl cellulose and ammonium polymethacrylate.

| Colloidal and/or Polymeric Oxides | Suspended Reinforcing Metal Oxides | Suspended Surface-Oxidised Refractory Metal Compounds |
|---|---|---|
| Al₂O₃ | TiO₂, MgO or SiO₂ | TiB₂, SiC, TiC or TiN |
| TiO₂ | Al₂O₃ or MgO | SiC or SiN |
| SiO₂ | Al₂O₃ or MgO | TiB₂, TiC or TiN |

In a variation, the suspended refractory metal compound does not need to be surface oxidised and the suspended reinforcing metal oxide may be replaced by the suspended surface-oxidised refractory metal compounds in the same weight percentage.

### Example 2

A slurry for producing a hydrophilic layer free of organic carbon (elemental or in the form of a compound) which can be bonded through a bonding layer to a carbon tile in accordance with the invention was prepared by suspending 2.5 g particulate Fe₂O₃ (-325 mesh), a refractory hard metal boride consisting of 92.5 g particulate needle-shaped surface-oxidised TiB₂ (-325 mesh) having a TiO₂ surface oxide film, and 2.5 g particulate TiO₂ (-325 mesh) in a colloid consisting of a combination of two grades of colloidal Al₂O₃, namely 28 ml of a first grade of colloidal Al₂O₃ (NYACOL® Al-20, a milky liquid with a colloidal particle size of about 40 to 60 nanometer) and 24 ml of a second grade of colloidal Al₂O₃ (CONDEA® 10/2 Sol, a clear, opalescent liquid with a colloidal particle size of about 10 to 30 nanometer).

This slurry produces upon heat treatment a matrix of mixed oxides consisting of titanium-aluminium mixed oxide and a small amount of iron-titanium-aluminium mixed oxide from the reaction of TiO₂, Fe₂O₃ and Al₂O₃. This matrix contains and bonds the TiB₂ and Fe₂O₃ particles.

This slurry is suitable for the manufacture of a composite coating as described in Example 4.

### Example 2a

Example 2's slurry composition consists of Fe₂O₃ and a reaction mixture made of the colloid (Al₂O₃), the suspended refractory metal boride (TiB₂) the suspended metal oxide (TiO₂). This Example can be modified by completely or partly substituting Fe₂O₃ with partly oxidised or oxides of copper and/or nickel, and/or by varying the composition of the reaction mixture as in Example 1a.

### Example 3

A further slurry for producing a highly aluminium-wettable hydrophilic start-up layer free of organic carbon which can be bonded through a bonding layer to a carbon tile in accordance with the invention, was prepared as follows. An amount of 60 g of surface oxidised copper particles (-325 mesh) was suspended in a carrier consisting of 13 ml of colloidal Al₂O₃ (7 ml NYACOL® Al-20, a milky liquid with a colloidal particle size of about 40 to 60 nanometer and 6 ml CONDEA® 10/2 Sol, a clear, opalescent liquid with a colloidal particle size of about 10 to 30 nanometer).

Upon heat treatment the slurry produces an alumina matrix containing and bonding the oxidised copper particles.

As a modification, oxidised or partly oxidised particles of nickel and/or iron may be used to substitute in part or completely the oxidised copper particles in colloidal alumina (CONDEA 25/5 with a pH > 7).

### Example 4

Three graphite tiles for use on a cathode bottom of a drained-cathode cell for the production of aluminium were covered with a multi-layer coating produced from the slurries of Examples 1, 2 and 3 as follows:

First, a bonding layer having a thickness of about 100 micron was painted onto the exposed surface of the graphite plate from the slurry of Example 1. The bonding layer was allowed to dry for 30 minutes.

The bonding layer was covered with 8 permanent aluminium-wettable hydrophilic layers obtained by painting layers of the slurry of Example 2. Each applied hydrophilic layer was allowed to dry for 30 minutes before application of the next layer. The 8 layers had a cumulated thickness of about 1.8 mm.

The permanent aluminium-wettable hydrophilic layers were then covered with a temporary start-up layer obtained by painting one layer of the slurry of Example 3. The start-up layer had a thickness of about 100 to 150 micron.

The coating formed by the bonding layer, the permanent aluminium-wettable hydrophilic layers and the temporary start-up layer on the tile was allowed to dry for 24 hours.

Two of the three coated tiles were then covered with an aluminium sheet having a thickness of about 1.5 cm and heated in an oven at a temperature of about 850-900°C in air.

The first coated tile was extracted from the oven after 30 minutes and allowed to cool down to ambient temperature. Examination of a cross-section of the coating showed that aluminium had infiltrated the start-up layer so that the coating was superficially wetted by molten aluminium. No reaction between aluminium and iron oxide had yet taken place. The bonding layer was intimately bonded to the (hydrophobic) carbon tile.

The second coated tile was extracted from the oven after 24 hours and allowed to cool down to ambient temperature. Examination of a cross-section of the coating showed that aluminium had infiltrated the start-up layer and the permanent aluminium-wettable hydrophilic layers. Part of the aluminium had reacted with Fe₂O₃ to form Al₂O₃ and Fe metal. Aluminium infiltration had been stopped on the bonding layer for lack of oxide reactable with aluminium.

The aluminium metal infiltration into the start-up layer and the permanent aluminium-wettable hydrophilic layers enhanced the conductivity of the coating. At ambient temperature, the perpendicular electrical resistance through the coating was less than 1 ohm after infiltration versus more than 500 ohm before infiltration.

The coatings on both tiles showed a continuous matrix of titanium-aluminium mixed oxides between the bonding layer and the permanent aluminium-wettable hydrophilic layers which guarantees an excellent adherence between the layers. In both cases the particles of TiB₂ had not been oxidised by the heat treatment and wettability of the coating by aluminium was very good. The angle of wettability was less than 10 deg.

The third coated graphite tile was used in an aluminium production drained cell as follows:

The graphite tile with the dried coating according to the invention was placed on the cell cathode bottom and covered with a 1.5 cm thick sheet of aluminium. The cell was heated to a temperature of about 850-900°C by passing an electrical current between the cathode and facing anodes through carbon powder. Other start-up heating procedures could also have been used, e.g. using gas burners to generate heat.

After 30 minutes at 850-900°C, the start-up coating was superficially wetted by molten aluminium which constitutes a barrier against damaging fluoride-based molten electrolyte constituents, such as sodium compounds, and a cryolite based electrolyte was filled into the cell.

The cell was further heated to 960°C at which temperature the cell was operated under an electrolysis current density of 0.8 A/cm² to produce aluminium under conventional steady state conditions.

### Example 5

Any of the layers of Examples 1 to 4 can be modified using inorganic polymeric carriers, such as the polymeric solutions (A) and (B) prepared as set out below, in replacement of the layer's colloidal carriers.
(A) An amount of 150 g of Fe(NO₃)₃.9 H₂O was heated to dissolve the salt in its own water of crystallisation to form a solution containing 29 g Fe₂O₃. The solution was heated to 120°C and 18.9 g of magnesium hydroxy-carbonate dissolved in the hot solution to form 7.5 g MgO in form of an inorganic polymer together with Fe₂O₃ suitable for use as an inorganic polymeric carrier.
(B) An amount of 100 g of Cr(NO₃)₃.9 H₂O was heated to dissolve the salt in its own water of crystallisation to form a solution containing 19 g Cr₂O₃. The solution was heated to 120°C and 12.5 g of magnesium-hydroxy carbonate containing the equivalent of 5.0 g MgO was added. Upon stirring a solution was obtained in the form of an anion-deficient polymer mixture with a density of approximately 1.5 g/cm³ suitable to act as an inorganic polymeric carrier.

## Claims

1. A method of bonding a protective coating on a wear-exposed surface of a carbon tile comprising:
- applying onto the wear-exposed surface of the carbon tile at least one layer of a slurry of particulate refractory material and/or a heat convertible precursor thereof suspended in a colloidal and/or inorganic polymeric carrier comprising a dispersion of colloidal particles and/or a solution of inorganic polymeric particles of binding metal oxide and/or a heat convertible precursor of the binding oxide; and
- heat treating the slurry-applied layer(s) to consolidate the particulate refractory material in the binding metal oxide to form said protective coating,
**characterised by** using in said slurry a hydrophobic carbon compound having a hydrophilic substituent as a bonding agent that bonds the binding metal oxide to the carbon tile by being bonded to the wear-exposed surface of the carbon tile and by having its hydrophilic substituent bonded to the binding metal oxide.

2. The method of claim 1, wherein said hydrophilic substituent is selected from -OR, -SO₃Na and -COOH.

3. The method of claim 2, wherein said carbon compound having a hydrophilic substituent is selected from ethylene glycol, hexanol, polyvinyl alcohol, polyvinyl acetate, polyacrylic acid, hydroxy propyl methyl cellulose and ammonium polymethacrylate.

4. The method of any preceding claim, wherein the protective coating comprises on the layer(s) containing the hydrophobic carbon compound (hereinafter called the "bonding layer(s)") one or more hydrophilic layers of refractory material which are substantially free of any elemental carbon or organic carbon compound.

5. The method of claim 4, wherein the hydrophilic layer(s) is/are applied from a slurry of particulate refractory material and/or a heat convertible precursor thereof suspended in a colloidal and/or inorganic polymeric carrier comprising a dispersion of colloidal particles and/or a solution of inorganic polymeric particles of binding metal oxide and/or a heat convertible precursor of the binding oxide.

6. The method of any preceding claim, wherein the protective coating comprises a binding metal oxide selected from lithia, beryllium oxide, magnesia, alumina, silica, titania, vanadium oxide, chromium oxide, iron oxide, nickel oxide, gallium oxide, yttria, .zirconia, niobium oxide, molybdenum oxide, ruthenia, indium oxide, tin oxide, tantalum oxide, tungsten oxide, thallium oxide, ceria, hafnia and thoria and precursors thereof.

7. The method of any preceding claim, wherein the protective coating comprises a refractory material selected from borides, silicides, nitrides, oxynitrides, carbides, oxycarbides, phosphides, oxides, aluminides, of titanium, zirconium, hafnium, vanadium, silicon, niobium, tantalum, nickel, molybdenum and iron.

8. The method of any preceding claim, wherein the protective coating comprises an aluminium-wetting metal oxide which when exposed to molten aluminium reacts therewith to produce alumina and the metal of said aluminium-wetting metal oxide.

9. The method of claim 8, wherein the aluminium-wetting metal oxide is selected from oxides of iron, copper, cobalt, nickel, zinc and manganese.

10. The method of claim 8 or 9 when depending on claim 4, wherein the hydrophilic layer(s) comprise(s) the aluminium-wetting oxide, the bonding layer(s) being made of aluminium-repellent material substantially free of any aluminium-wetting metal oxide.

11. The method of any preceding claim, wherein the carbon tile is made of graphite or graphitised carbon material.

12. The method of any preceding claim, wherein the carbon tile comprises a bottom surface which is not covered with the protective coating.

13. Use, in a slurry for forming a protective coating of particulate refractory material consolidated in a binding metal oxide upon application and heat treatment of said slurry on a wear-exposed surface of a carbon tile for use in an aluminium electrowinning cell, which slurry comprises the particulate refractory material and/or a heat convertible precursor thereof suspended in a colloidal and/or inorganic polymeric carrier comprising a dispersion of colloidal particles and/or a solution of inorganic polymeric particles of binding metal oxide and/or a heat convertible precursor of the binding oxide,
of a hydrophobic carbon compound having a hydrophilic substituent as an agent for bonding the binding metal oxide to the carbon tile by bonding the hydrophobic carbon compound to the wear-exposed surface of the carbon tile and by bonding its hydrophilic substituent to the binding metal oxide.

14. A tile comprising a carbon substrate having a wear-exposed surface covered with a protective coating comprising:
- at least one bonding layer of particulate refractory material consolidated in a binding metal oxide formed on the wear-exposed surface of the carbon substrate from a heat-treated slurry that comprises the particulate refractory material and/or a heat convertible precursor thereof suspended in a colloidal and/or inorganic polymeric carrier comprising a dispersion of colloidal particles and/or a solution of inorganic polymeric particles of binding metal oxide and/or a heat convertible precursor of the binding oxide; and
- one or more outer layers of refractory material on the bonding layer(s),
**characterised in that** the outer layer(s) is/are hydrophilic and free of any elemental carbon or organic carbon compound, and that the bonding layer further comprises dispersed particles of elemental carbon and/or a carbon compound derived from a hydrophobic carbon compound having a hydrophilic substituent that is present in said slurry prior to heat treatment and that bonds the binding metal oxide to the carbon tile by being bonded to the wear-exposed surface of the carbon substrate and by having its hydrophilic substituent bonded to the binding metal oxide.

15. The tile of claim 14, wherein the hydrophilic layer(s) is/are applied from a slurry of particulate refractory material and/or a heat convertible precursor thereof suspended in a colloidal and/or inorganic polymeric carrier comprising a dispersion of colloidal particles and/or a solution of inorganic polymeric particles of binding metal oxide and/or a heat convertible precursor of the binding oxide.

16. The tile of claim 14 or 15, wherein the protective coating comprises a binding metal oxide selected from lithia, beryllium oxide, magnesia, alumina, silica, titania, vanadium oxide, chromium oxide, iron oxide, nickel oxide, gallium oxide, yttria, zirconia, niobium oxide, molybdenum oxide, ruthenia, indium oxide, tin oxide, tantalum oxide, tungsten oxide, thallium oxide, ceria, hafnia and thoria and precursors thereof.

17. The tile of any one of claims 14 to 16, wherein the protective coating comprises a refractory material selected from borides, silicides, nitrides, oxynitrides, carbides, oxycarbides, phosphides, oxides, aluminides, of titanium, zirconium, hafnium, vanadium, silicon, niobium, tantalum, nickel, molybdenum and iron.

18. The tile of any one of claims 14 to 17, wherein the protective coating comprises an aluminium-wetting metal oxide which when exposed to molten aluminium reacts therewith to produce alumina and the metal of said aluminium-wetting metal oxide.

19. The tile of claim 18, wherein the aluminium-wetting metal oxide is selected from oxides of iron, copper, cobalt, nickel, zinc and manganese.

20. The tile of claim 18 or 19, wherein the hydrophilic layer(s) comprise(s) the aluminium-wetting oxide, the bonding layer(s) being made of aluminium-repellent material substantially free of any aluminium-wetting metal oxide. '

21. The tile of any one of claims 14 to 20, wherein the carbon substrate is made of graphite or graphitised carbon material.

22. The tile of any one of claims 14 to 21, wherein the carbon substrate comprises a bottom surface which is not covered with the bonding and hydrophilic layers.

23. An apparatus for the production, purification or recycling of a metal in a molten state comprising at least one component which is protected against a high temperature environment that is oxidising and/or corrosive, and gaseous and/or molten, by at least one tile as defined in any one of claims 14 to 22.

24. The apparatus of claim 23, which is a cell for the electrowinning of a metal from a compound thereof dissolved in a molten electrolyte, the tile protecting said component against at least one of the electrowon metal, the molten electrolyte and cell gases.

25. The apparatus of claim 24, which is an aluminium electrowinning cell, the tile protecting said component against at least one of molten aluminium, molten electrolyte and anodically produced gases.

26. The apparatus of claim 25, wherein the hydrophilic layer(s) of the tile form(s) a cathodic surface.

27. The cell of claim 26, wherein the cathodic surface is an aluminium-wettable surface, in particular a drained surface.

28. The apparatus of claim 23, which is an arc furnace for the recycling of steel, the tile protecting said component against oxidising gas and/or molten steel.

29. The apparatus of claim 23, which is a device for the purification of a molten metal by the injection of a purifying fluid into the molten metal to remove impurities towards the surface thereof, the tile protecting said component against at least one of the molten metal to be purified, the purifying fluid and impurities of the molten metal.

30. The apparatus of claim 29, which is a device for the purification of molten aluminium, molten magnesium, cast iron or molten steel.

31. A method of producing, purifying or recycling a metal in an apparatus as defined in any one of claims 23 to 29, the method comprising using said tile to protect a component of the apparatus against a high temperature environment which is oxidising and/or corrosive, and gaseous and/or molten.

32. The method of claim 31, which comprises electrolysing a metal compound, in particular alumina, in a molten electrolyte of a metal electrowinning cell to produce the metal, in particular aluminium, of the compound cathodically and gas anodically, and using said tile to protect a component of the cell against at least one of electrolyte, cathodically produced metal and anodically produced gas.

## Patentansprüche

1. Verfahren zum Anbringen einer Schutzbeschichtung auf einer der Abnutzung ausgesetzten Oberfläche einer Kohlenstoffkachel, bei dem
- man auf die der Abnutzung ausgesetzten Oberfläche der Kohlenstoffkachel mindestens eine Schicht einer Aufschlämmung von partikulärem feuerfesten Material und/oder einem wärmeumwandelbaren Vorläufer davon aufbringt, welche in einem kolloidalen und/oder anorganischen polymeren Träger suspendiert sind, der eine Dispersion von kolloidalen Partikeln und/oder eine Lösung von anorganischen polymeren Partikeln eines Bindemetalloxids und/oder eines wärmeumwandelbaren Vorläufers des Bindeoxids enthält, und
- man die durch die Aufschlämmung aufgebrachte(n) Schicht(en) wärmebehandelt, um das partikuläre feuerfeste Material in dem Bindemetalloxid zu verfestigen, so daß die Schutzbeschichtung gebildet wird,
**dadurch gekennzeichnet, daß** in der Aufschlämmung eine hydrophobe Kohlenstoffverbindung mit einem hydrophilen Substituenten als Bindemittel verwendet wird, welches das Bindemetalloxid an die Kohlenstoffkachel bindet, indem es an die der Abnutzung ausgesetzten Oberfläche der Kohlenstoffkachel gebunden wird und indem sein hydrophiler Substituent an das Bindemetalloxid gebunden wird.

2. Verfahren nach Anspruch 1, bei dem der hydrophile Substituent ausgewählt ist aus -OH, -SO₃Na und -COOH.

3. Verfahren nach Anspruch 2, bei dem die Kohlenstoffverbindung mit einem hydrophilen Substituenten ausgewählt ist aus Ethylenglycol, Hexanol, Polyvinylalkohol, Polyvinylacetat, Polyacrylsäure, Hydroxypropylmethylcellulose und Ammoniumpolymethacrylat.

4. Verfahren nach einem der vorangehenden Ansprüche, bei dem die Schutzbeschichtung auf der/den Schicht(en), die die hydrophobe Kohlenstoffverbindung enthalten (im folgenden die "Bindeschicht(en)" genannt), eine oder mehrere hydrophile Schichten eines feuerfesten Materials enthält, das im wesentlichen frei von jeglichem elementaren Kohlenstoff oder organischen Kohlenstoffverbindungen ist.

5. Verfahren nach Anspruch 4, bei dem die hydrophile(n) Schicht(en) aus einer Aufschwämmung von partikulärem feuerfesten Material und/oder einem wärmeumwandelbaren Vorläufer davon aufgebracht wird/werden, welche in einem kolloidalen und/oder anorganischen polymeren Träger suspendiert sind, der eine Dispersion von kolloidalen Partikeln und/oder eine Lösung von anorganischen polymeren Partikeln eines Bindemetalloxids und/oder eines wärmeumwandelbaren Vorläufers des Bindeoxids enthält.

6. Verfahren nach einem der vorangehenden Ansprüche, bei dem die Schutzbeschichtung ein Bindemetalloxid enthält, das ausgewählt ist aus Lithiumoxid, Berylliumoxid, Magnesiumoxid, Aluminiumoxid, Siliciumoxid, Titanoxid, Vanadiumoxid, Chromoxid, Eisenoxid, Nickeloxid, Galliumoxid, Yttriumoxid, Zirkoniumoxid, Nioboxid, Molybdänoxid, Rutheniumoxid, Indiumoxid, Zinnoxid, Tantaloxid, Wolframoxid, Thalliumoxid, Ceroxid, Hafniumoxid und Thoriumoxid und Vorläufern davon.

7. Verfahren nach einem der vorangehenden Ansprüche, bei dem die Schutzbeschichtung ein feuerfestes Material enthält, das ausgewählt ist aus Boriden, Siliciden, Nitriden, Oxynitriden, Carbiden, Oxycarbiden, Phosphiden, Oxiden, Aluminiden von Titan, Zirkonium, Hafnium, Vanadium, Silicium, Niob, Tantal, Nickel, Molybdän und Eisen.

8. Verfahren nach einem der vorangehenden Ansprüche, bei dem die Schutzbeschichtung ein aluminiumbenetzendes Metalloxid enthält, das sich, wenn es geschmolzenem Aluminium ausgesetzt wird, damit umsetzt, um Aluminiumoxid und das Metall des aluminiumbenetzenden Metalloxids zu bilden.

9. Verfahren nach Anspruch 8, bei dem das aluminiumbenetzende Metalloxid ausgewählt ist aus Oxiden von Eisen, Kupfer, Kobalt, Nickel, Zink und Mangan.

10. Verfahren nach Anspruch 8 oder 9, bei dem dann, wenn diese von Anspruch 4 abhängen, die hydrophile(n) Schicht(en) das aluminiumbenetzende Oxid enthält/enthalten, und die Bindeschicht(en) aus aluminiumabstoßendem Material gemacht ist/sind, das im wesentlichen frei von jeglichem aluminiumbenetzenden Metalloxid ist.

11. Verfahren nach einem der vorangehenden Ansprüche, bei dem die Kohlenstoffkachel aus Graphit oder graphitisiertem Kohlenstoffmaterial gemacht ist.

12. Verfahren nach einem der vorangehenden Ansprüche, bei dem die Kohlenstoffkachel eine Unterseite aufweist, die nicht mit der Schutzbeschichtung bedeckt ist.

13. Verwendung einer hydrophoben Kohlenstoffverbindung mit einem hydrophilen Substituenten zum Binden eines Bindemetalloxids an eine Kohlenstoffkachel, indem die hydrophobe Kohlenstoffverbindung an die der Abnutzung ausgesetzten Oberfläche der Kohlenstoffkachel gebunden wird und indem sein hydrophiler Substituent an das Bindemetalloxid gebunden wird, wobei die hydrophobe Kohlenstoffverbindung in einer Aufschlämmung zur Bildung einer Schutzbeschichtung aus partikulärem feuerfesten Material vorliegt, das in einem Bindemetalloxid verfestigt ist, nachdem die Aufschlämmung auf eine der Abnutzung ausgesetzten Oberfläche einer Kohlenstoffkachel zur Verwendung in einer aluminiumelektrolytischen Extraktionszelle aufgebracht und wärmebehandelt wurde, wobei die Aufschlämmung das partikuläre feuerfeste Material und/oder einen wärmeumwandelbaren Vorläufer davon enthält, welche in einem kolloidalen und/oder anorganischen polymeren Träger suspendiert sind, der eine Dispersion von kolloidalen Partikeln und/oder eine Lösung von anorganischen polymeren Partikeln des Bindemetalloxids und/oder eines wärmeumwandelbaren Vorläufers des Bindeoxids enthält.

14. Eine Kachel, die ein Kohlenstoffsubstrat mit einer der Abnutzung ausgesetzten Oberfläche enthält, die mit einer Schutzbeschichtung bedeckt ist, die
- mindestens eine Bindeschicht eines partikulären feuerfesten Materials, das in einem Bindemetalloxid verfestigt ist, welches auf der der Abnutzung ausgesetzten Oberfläche des Kohlenstoffsubstrats aus einer wärmebehandelten Aufschlämmung gebildet wird, die das partikuläre feuerfeste Material und/oder einen wärmeumwandelbaren Vorläufer davon enthält, welche in einem kolloidalen und/oder anorganischen polymeren Träger suspendiert sind, der eine Dispersion von kolloidalen Partikeln und/oder eine Lösung von anorganischen polymeren Partikeln des Bindemetalloxids und/oder eines wärmeumwandelbaren Vorläufers des Bindeoxids enthält, und
- eine oder mehrere Außenschichten des feuerfesten Materials auf der/den Bindeschicht(en)
enthält,
**dadurch gekennzeichnet, daß** die Außenschicht (en) hydrophil und frei von jeglichem elementaren Kohlenstoff oder organischen Kolenstoffverbindungen ist/sind, und daß die Bindeschicht weiterhin dispergierte Partikel aus elementarem Kohlenstoff und/oder eine Kohlenstoffverbindung enthält, die von einer hydrophoben Kohlenstoffverbindung mit einem hydrophilen Substituenten abgeleitet ist, wobei die Kohlenstoffverbindung vor der Wärmebehandlung in der Aufschlämmung vorliegt und das Bindemetalloxid an die Kohlenstoffkachel bindet, indem sie an die der Abnutzung ausgesetzten Oberfläche des Kohlenstoffsubstrats gebunden wird und indem ihr hydrophiler Substituent an das Bindemetalloxid gebunden wird.

15. Kachel nach Anspruch 14, bei der die hydrophile(n) Schicht(en) aus einer Aufschlämmung von partikulärem feuerfesten Material und/oder einem wärmumwandelbaren Vorläufer davon aufgebracht wird/werden, welche in einem kolloidalen und/oder anorganischen polymeren Träger suspendiert sind, der eine Dispersion von kolloidalen Partikeln und/oder eine Lösung von anorganischen polymeren Partikeln des Bindemetalloxids und/oder eines wärmeumwandelbaren Vorläufers des Bindeoxids enthält.

16. Kachel nach Anspruch 14 oder 15, bei der die Schutzbeschichtung ein Bindemetalloxid enthält, das ausgewählt ist aus Lithiumoxid, Berylliumoxid, Magnesiumoxid, Aluminiumoxid, Siliciumoxid, Titanoxid, Vanadiumoxid, Chromoxid, Eisenoxid, Nickeloxid, Galliumoxid, Yttriumoxid, Zirkoniumoxid, Nioboxid, Molybdänoxid, Rutheniumoxid, Indiumoxid, Zinnoxid, Tantaloxid, Wolframoxid, Thalliumoxid, Ceroxid, Hafniumoxid und Thoriumoxid sowie Vorläufern davon.

17. Kachel nach einem der Ansprüche 14 bis 16, bei der die Schutzbeschichtung ein feuerfestes Material enthält, das ausgewählt ist aus Boriden, Siliciden, Nitriden, Oxynitriden, Carbiden, Oxycarbiden, Phosphiden, Oxiden, Aluminiden von Titan, Zirkonium, Hafnium, Vanadium, Silicium, Niob, Tantal, Nickel, Molybdän und Eisen.

18. Kachel nach einem der Ansprüche 14 bis 17, bei der die Schutzbeschichtung ein aluminiumbenetzendes Metalloxid enthält, das sich, wenn es geschmolzenem Aluminium ausgesetzt wird, damit umsetzt, um Aluminiumoxid und das Metall des aluminiumbenetzenden Metalloxids zu bilden.

19. Kachel nach Anspruch 18, bei der das aluminiumbenetzende Metalloxid ausgewählt ist aus Oxiden von Eisen, Kupfer, Cobalt, Nickel, Zink und Mangan.

20. Kachel nach Anspruch 18 oder 19, bei der die hydrophile(n) Schicht(en) das aluminiumbenetzende Oxid enthält/enthalten, und die Bindeschicht(en) aus aluminiumabstoßendem Material gemacht ist/sind, das im wesentlichen frei von jeglichem aluminiumbenetzenden Metalloxid ist.

21. Kachel nach einem der Ansprüche 14 bis 20, bei der das Kohlenstoffsubstrat aus Graphit oder gaphitisiertem Kohlenstoffmaterial gemacht ist.

22. Kachel nach einem der Ansprüche 14 bis 21, bei der das Kohlenstoffsubstrat eine Unterseite aufweist, die nicht mit den Bindeschichten und hydrophilen Schichten bedeckt ist.

23. Vorrichtung zur Herstellung, Reinigung oder zum Recycling eines Metalls im geschmolzenen Zustand, die mindestens einen Bestandteil enthält, der durch mindestens eine Kachel gemäß einem der Ansprüche 14 bis 22 gegen eine Hochtemperaturumgebung geschützt ist, die oxidierend und/oder korrodierend sowie gasförmig und/oder geschmolzen ist.

24. Vorrichtung nach Anspruch 23, die eine Zelle zur elekrolytischen Extraktion eines Metalls aus einer Verbindung desselben ist, welche in einem geschmolzenen Elektrolyt gelöst ist, wobei die Kachel den Bestandteil mindestens gegen das elektrolytisch extrahierte Metall, den geschmolzenen Elektrolyten und/oder die Zellgase schützt.

25. Vorrichtung nach Anspruch 24, die eine elektrolytische Extraktionszelle zur Gewinnung von Aluminium ist, wobei die Kachel den Bestandteil mindestens gegen das geschmolzene Aluminium, den geschmolzenen Elektrolyten und/oder die anodisch gebildeten Gase schützt.

26. Vorichtung nach Anspruch 25, bei der die hydrophile(n) Schicht (en) der Kachel eine kathodische Oberfläche bildet/bilden.

27. Zelle nach Anspruch 26, bei der die kathodische Oberfläche eine aluminiumbenetzbare Oberfläche, insbesondere eine Drain-Oberfläche ist.

28. Vorrichtung nach Anspruch 23, die ein Lichtbogenofen zum Recyceln von Stahl ist, wobei die Kachel den Bestandteil gegen oxidierende Gase und/oder geschmolzenen Stahl schützt.

29. Vorrichtung nach Anspruch 23, die eine Einrichtung zur Reinigung von geschmolzenem Metall durch die Injektion eines reinigenden Fluids in das geschmolzene Metall ist, um Verunreinigungen in Richtung der Oberfläche davon zu entfernen, wobei die Kachel den Bestandteil mindestens gegen das geschmolzene zu reinigende Metall, das reinigende Fluid und/oder die Verunreinigungen des geschmolzenen Metalls schützt.

30. Vorrichtung nach Anspruch 29, die eine Einrichtung zur Reinigung von geschmolzenem Aluminium, geschmolzenem Magnesium, Gußeisen oder geschmolzenem Stahl ist.

31. Verfahren zur Herstellung, Reinigung oder zum Recyclen eines Metalls in einer Vorrichtung gemäß einem der Ansprüche 23 bis 29, bei dem man die Kachel verwendet, um einen Bestandteil der Vorrichtung gegen eine Hochtemperaturumgebung zu schützen, die oxidierend und/oder korridierend sowie gasförmig und/oder geschmolzen ist.

32. Verfahren nach Anspruch 31, bei dem man eine Metallverbindung, insbesondere Aluminiumoxid, in einem geschmolzenen Elektrolyten einer elektrolytischen Extraktionszelle zur Gewinnung von Metall elektrolysiert, um kathodisch das Metall, insbesondere Aluminium, aus der Verbindung und anodisch Gas herzustellen, und bei dem man die Kachel verwendet, um einen Bestandteil der Zelle mindestens gegen den Elektrolyten, das kathodisch hergestellte Metall und/oder das anodisch hergestellte Gas zu schützen.

## Revendications

1. Procédé de liaison d'un revêtement protecteur sur une surface exposée à l'usure d'une tuile en carbone consistant à :
- appliquer sur la surface exposée à l'usure de la tuile en carbone au moins une couche d'un coulis de matière réfractaire particulaire et/ou un précurseur convertible à la chaleur de celle-ci suspendu dans un support colloïdal et/ou polymère inorganique comprenant une dispersion de particules colloïdales et/ou une solution de particules polymères inorganiques d'oxyde métallique liant et/ou un précurseur convertible à la chaleur de l'oxyde liant ; et
- traiter thermiquement la(les) couche(s) appliquée(s) de coulis pour consolider la matière réfractaire particulaire dans l'oxyde métallique liant pour former ledit revêtement protecteur,
**caractérisé en ce qu'**il consiste à utiliser dans ledit coulis un composé de carbone hydrophobe ayant un substituant hydrophile en tant qu'agent de liaison qui lie l'oxyde métallique liant à la tuile en carbone en étant lié à la surface exposée à l'usure de la tuile en carbone et en ayant son substituant hydrophile lié à l'oxyde métallique liant.

2. Procédé selon la revendication 1, dans lequel ledit substituant hydrophile est choisi à partir de -OH, -SO₃Na et -COOH.

3. Procédé selon la revendication 2, dans lequel ledit composé en carbone ayant un substituant hydrophile est choisi à partir d'éthylèneglycol, d'hexanol, d'alcool polyvinylique, d'acétate de polyvinyle, d'acide polyacrylique, d'hydroxypropylméthylcellulose et de polyméthacrylate d'ammonium.

4. Procédé selon une quelconque revendication précédente, dans lequel le revêtement protecteur comprend sur la(les) couche(s) contenant le composé de carbone hydrophobe (ci-après désignée la(les) "couche(s) de liaison") une ou plusieurs couches hydrophiles de matière réfractaire qui sont sensiblement dépourvues d'un quelconque composé de carbone élémentaire ou de carbone organique.

5. Procédé selon la revendication 4, dans lequel la(les) couche(s) hydrophile(s) est/sont appliquées à partir d'un coulis de matière réfractaire particulaire et/ou d'un précurseur convertible à la chaleur de celle-ci suspendu dans un support colloïdal et/ou polymère inorganique comprenant une dispersion de particules colloïdales et/ou une solution de particules polymères inorganiques d'oxyde métallique liant et/ou de précurseur convertible à la chaleur de l'oxyde liant.

6. Procédé selon une quelconque revendication précédente, dans lequel le revêtement protecteur comprend un oxyde métallique liant choisi à partir de lithine, d'oxyde de béryllium, de magnésie, d'alumine, de silice, d'oxyde de titane, d'oxyde de vanadium, d'oxyde de chrome, d'oxyde de fer, d'oxyde de nickel, d'oxyde de gallium, d'yttria, de zircone, d'oxyde de niobium, d'oxyde de molybdène, d'oxyde de ruthénium, d'oxyde d'indium, d'oxyde d'étain, d'oxyde de tantale, d'oxyde de tungstène, d'oxyde de thallium, d'oxyde de cérium, d'oxyde d'hafnium et de thorine et des précurseurs de ceux-ci.

7. Procédé selon une quelconque revendication précédente, dans lequel le revêtement protecteur comprend une matière réfractaire choisie à partir de borures, siliciures, nitrures, oxynitrures, carbures, oxycarbures, phosphures, oxydes, aluminures, de titane, de zirconium, d'hafnium, de vanadium, de silicium, de niobium, de tantale, de nickel, de molybdène et de fer.

8. Procédé selon une quelconque revendication précédente, dans lequel le revêtement protecteur comprend un oxyde métallique mouillable par l'aluminium qui, quand il est exposé à l'aluminium en fusion, réagit avec celui-ci pour produire de l'alumine et le métal dudit oxyde métallique mouillable par l'aluminium.

9. Procédé selon la revendication 8, dans lequel l'oxyde métallique mouillable par l'aluminium est choisi à partir d'oxydes de fer, de cuivre, de cobalt, de nickel, de zinc et de manganèse.

10. Procédé selon la revendication 8 ou 9 quand elle dépend de la revendication 4, dans lequel la(les) couche(s) hydrophile(s) comprend (comprennent) l'oxyde mouillable par l'aluminium, la(les) couche(s) de liaison étant réalisées en matière repoussant l'aluminium sensiblement dépourvue d'un quelconque oxyde métallique mouillable par l'aluminium.

11. Procédé selon une quelconque revendication précédente, dans lequel la tuile en carbone est réalisée en graphite ou en matière carbonée graphitisée.

12. Procédé selon une quelconque revendication précédente, dans lequel la tuile en carbone comprend une surface de fond qui n'est pas recouverte du revêtement protecteur.

13. Utilisation, dans un coulis pour former un revêtement protecteur de matière réfractaire particulaire consolidée dans un oxyde métallique liant lors de l'application et du traitement thermique dudit coulis sur une surface exposée à l'usure d'une tuile en carbone pour une utilisation dans une cuve d'électro-obtention d'aluminium, lequel coulis comprend la matière réfractaire particulaire et/ou un précurseur convertible à la chaleur de celle-ci suspendu dans un support colloïdal et/ou polymère inorganique comprenant une dispersion de particules colloïdales et/ou une solution de particules polymères inorganiques d'oxyde métallique liant et/ou un précurseur convertible à la chaleur de l'oxyde liant, d'un composé de carbone hydrophobe ayant un substituant hydrophile en tant qu'agent pour lier l'oxyde métallique liant à la tuile en carbone en liant le composé de carbone hydrophobe à la surface exposée à l'usure de la tuile en carbone et en liant son substituant hydrophile à l'oxyde métallique liant.

14. Tuile comprenant un substrat en carbone ayant une surface exposée à l'usure recouverte d'un revêtement protecteur comprenant :
- au moins une couche de liaison de matière réfractaire particulaire consolidée dans un oxyde métallique liant formé sur la surface exposée à l'usure du substrat en carbone à partir d'un coulis traité thermiquement qui comprend la matière réfractaire particulaire et/ou un précurseur convertible à la chaleur de celle-ci suspendu dans un support colloïdal et/ou polymère inorganique comprenant une dispersion de particules colloïdales et/ou une solution de particules polymères inorganiques d'oxyde métallique liant et/ou un précurseur convertible à la chateur de l'oxyde liant ; et
- une ou plusieurs couches externes de matière réfractaire sur la(les) couche(s) de liaison,
**caractérisée en ce que** la(les) couche(s) externe(s) est/sont hydrophiles et dépourvues d'un quelconque composé de carbone organique ou de carbone élémentaire, et **en ce que** la couche de liaison comprend de plus des particules dispersées de carbone élémentaires et/ou d'un composé de carbone dérivé d'un composé de carbone hydrophobe ayant un substituant hydrophile qui est présent dans ledit coulis avant traitement thermique et qui lie l'oxyde métallique liant à la tuile en carbone en étant lié à la surface exposée à l'usure du substrat en carbone et en ayant son substituant hydrophile lié à l'oxyde métallique liant.

15. Tuile selon la revendication 14, dans laquelle la(les) couche(s) hydrophiles(s) est/sont appliquées à partir d'un coulis de matière réfractaire particulaire et/ou d'un précurseur convertible à la chaleur de celle-ci suspendu dans un support colloïdal et/ou polymère inorganique comprenant une dispersion de particules colloïdales et/ou une solution de particules polymères inorganiques d'oxyde métallique liant et/ou d'un précurseur convertible à la chaleur de l'oxyde liant.

16. Tuile selon la revendication 14 ou 15, dans laquelle le revêtement protecteur comprend un oxyde métallique liant choisi à partir de lithine, d'oxyde de béryllium, de magnésie, d'alumine, de silice, d'oxyde de titane, d'oxyde de vanadium, d'oxyde de chrome, d'oxyde de fer, d'oxyde de nickel, d'oxyde de gallium, d'yttria, de zircone, d'oxyde de niobium, d'oxyde de molybdène, d'oxyde de ruthénium, d'oxyde d'indium, d'oxyde d'étain, d'oxyde de tantale, d'oxyde de tungstène, d'oxyde de thallium, d'oxyde de cérium, d'oxyde d'hafnium et de thorine et des précurseurs de ceux-ci.

17. Tuile selon une quelconque des revendications 14 à 16, dans laquelle le revêtement protecteur comprend une matière réfractaire choisie à partir de borures, siliciures, nitrures, oxynitrures, carbures, oxycarbures, phosphures, oxydes, aluminures, de titane, de zirconium, d'hafnium, de vanadium, de silicium, de niobium, de tantale, de nickel, de molybdène et de fer.

18. Tuile selon une quelconque des revendications 14 à 17, dans laquelle le revêtement protecteur comprend un oxyde métallique mouillable par l'aluminium qui, quand il est exposé à l'aluminium en fusion, réagit avec celui-ci pour produire de l'alumine et le métal dudit oxyde métallique mouillable par l'aluminium.

19. Tuile selon la revendication 18, dans laquelle l'oxyde métallique mouillable par l'aluminium est choisi à partir d'oxydes de fer, de cuivre, de cobalt, de nickel, de zinc et de manganèse.

20. Tuile selon la revendication 18 ou 19, dans laquelle la(les) couche(s) hydrophile(s) comprend (comprennent) l'oxyde mouillable par l'aluminium, la(les) couche(s) de liaison étant réalisée(s) en une matière repoussant l'aluminium sensiblement dépourvue d'un quelconque oxyde métallique mouillable par l'aluminium.

21. Tuile selon une quelconque des revendications 14 à 20, dans laquelle le substrat en carbone est réalisé en graphite ou en matière carbonée graphitisée.

22. Tuile selon une quelconque des revendications 14 à 21, dans laquelle le substrat en carbone comprend une surface de fond qui n'est pas recouverte des couches de liaison et hydrophiles.

23. Appareil pour la production, la purification ou le recyclage d'un métal dans un état en fusion comprenant au moins un composant qui est protégé contre un environnement à haute température qui est oxydant et/ou corrosif et gazeux et/ou en fusion, par au moins une tuile telle que définie dans l'une quelconque des revendications 14 à 22.

24. Appareil selon la revendication 23, qui est une cuve pour l'électro-obtention d'un métal à partir d'un composé de celui-ci dissous dans un électrolyte en fusion, la tuile protégeant ledit composant contre au moins l'un du métal électro-obtenu, de l'électrolyte en fusion et des gaz de cuve.

25. Appareil selon la revendication 24, qui est une cuve d'électro-obtention d'aluminium, la tuile protégeant ledit composant contre au moins l'un de l'aluminium en fusion, de l'électrolyte en fusion et des gaz produits de façon anodique.

26. Appareil selon la revendication 25, dans lequel la(les) couche(s) hydrophile(s) de la tuile forme(forment) une surface cathodique.

27. Cuve de la revendication 26, dans laquelle la surface cathodique est une surface mouillable par l'aluminium, en particulier une surface de drainage.

28. Appareil selon la revendication 23, qui est un four à arc pour le recyclage d'acier, la tuile protégeant ledit composant contre les gaz d'oxydation et/ou l'acier en fusion.

29. Appareil selon la revendication 23, qui est un dispositif pour la purification d'un métal en fusion par l'injection d'un fluide purifiant dans le métal en fusion pour éliminer les impuretés vers la surface de celui-ci, la tuile protégeant ledit composant contre au moins l'un du métal en fusion à purifier, du fluide purifiant et des impuretés du métal en fusion.

30. Appareil selon la revendication 29, qui est un dispositif pour la purification d'aluminium en fusion, de magnésium en fusion, de fonte ou d'acier en fusion.

31. Procédé pour produire, purifier ou recycler un métal dans un appareil tel que défini dans l'une quelconque des revendications 23 à 29, le procédé consistant à utiliser ladite tuile pour protéger un composant de l'appareil contre un environnement à haute température qui est oxydant et/ou corrosif et gazeux et/ou en fusion.

32. Procédé selon la revendication 31, qui consiste à électrolyser un composé métallique, en particulier de l'alumine, dans un électrolyte en fusion d'une cuve d'électro-obtention de métal pour produire le métal, en particulier de l'aluminium, du composé de façon cathodique et les gaz de façon anodique, et à utiliser ladite tuile pour protéger un composant de la cuve contre au moins l'un de l'électrolyte, du métal produit de façon cathodique et des gaz engendrés de façon anodique.
